(19) Europäisches Patentamt
European Patent Office
Office européen des brevets

(11) **EP 2 642 364 B1**

(12) **EUROPEAN PATENT SPECIFICATION**

(45) Date of publication and mention
of the grant of the patent:
**28.08.2019 Bulletin 2019/35**

(51) Int Cl.:
***B62D 15/02*** ^(2006.01)

(21) Application number: **13158598.6**

(22) Date of filing: **11.03.2013**

(54) **Method for warning the driver of a motor vehicle about the presence of an object in the surroundings of the motor vehicle, camera system and motor vehicle**

Verfahren zum Warnen des Fahrers eines Kraftfahrzeugs vor der Anwesenheit eines Objekts in der Umgebung des Kraftfahrzeugs, Kamerasystem und Kraftfahrzeug

Procédé pour avertir le conducteur d'un véhicule automobile de la présence d'un objet dans l'environnement du véhicule automobile, système de caméra et véhicule à moteur

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.03.2012 DE 102012005851**

(43) Date of publication of application:
**25.09.2013 Bulletin 2013/39**

(73) Proprietors:
• **Valeo Schalter und Sensoren GmbH**
**74321 Bietigheim-Bissingen (DE)**
• **Connaught Electronics Ltd.**
**Tuam, County Galway (IE)**

(72) Inventors:
• **Hughes, Ciaran**
**Kinvara, County Galway (IE)**
• **Chanussot, Lowik**
**75010 Paris (FR)**

• **Bonhoure, Patrick**
**74100 Annemasse (FR)**

(74) Representative: **Claassen, Maarten Pieter et al**
**Valeo Schalter und Sensoren GmbH**
**CDA-IP**
**Laiernstraße 12**
**74321 Bietigheim-Bissingen (DE)**

(56) References cited:
**EP-A2- 1 065 642** **EP-A2- 1 950 689**
**WO-A1-2011/014482** **DE-A1-102008 049 113**
**DE-A1-102010 000 383** **US-B1- 6 285 778**

• **GUANGLIN MA ET AL: "A real-time rear view camera based obstacle detection", INTELLIGENT TRANSPORTATION SYSTEMS, 2009. ITSC '09. 12TH INTERNATIONAL IEEE CONFERENCE ON, IEEE, PISCATAWAY, NJ, USA, 4 October 2009 (2009-10-04), pages 1-6, XP031560075, ISBN: 978-1-4244-5519-5**

**Description**

The invention relates to a method for warning the driver of a motor vehicle about the presence of an object in the surroundings of the motor vehicle. The driver is warned by displaying images in the surroundings on a display device of the motor vehicle. A camera image of the surroundings is captured by means of a camera of the motor vehicle, and the object is identified in the camera image. An expected trajectory of the motor vehicle is determined, namely in particular dependent on a current steering angle of the motor vehicle. Based on the camera image, a display image is generated, which shows a superimposed optical representation of the expected trajectory. The display image is then displayed on the display device. The invention in addition relates to a camera system for a motor vehicle as well as a motor vehicle with a camera system.

It is already prior art to display images of the surroundings captured by means of a camera on a display in the motor vehicle. Such a method is for example known from the document WO 2011/014482 A1. Here, an expected trajectory of the motor vehicle is determined, and an optical representation of the expected trajectory is projected onto the displayed images on the display. The displayed images thus include a superimposed representation of the expected trajectory. Such a method is also known from EP1065642 A2, which discloses in addition a change in the graphical representation of the expected trajectory if an object or obstacle is detected.

Detection algorithms also belong to the prior art, which serve for identifying an object - for instance a pedestrian or else another vehicle - in the camera image. Such detection algorithms are usually configured such that the detected object is surrounded by a bounding box. This bounding box is then represented on the display together with the image of the object. Such an approach is for example known from the document JP 2011/119917 A.

Such detection algorithms are also usally configured to limit the searching of an object in a captured image to a Region of Interest (ROI), like in EP1950689 A2.

The fact that a plurality of information is represented on the display device such that the representation on the display device is little clear and thus also little helpful altogether, is disadvantageous in the prior art. Namely, the driver cannot recognize the essential information relevant to safety from the multitude of information on the display device. In particular, if a plurality of objects with respective bounding boxes is represented, the clarity of the representation is particularly low due to the superimposition of the plurality of bounding boxes.

It is an object of the invention to demonstrate a way how the driver of the motor vehicle can be reliably assisted with the aid of the display device in a method of the initially mentioned kind.

According to the invention, this object is solved by a method, by a camera system as well as by a motor vehicle having the features according to the respective independent claims. Advantageous implementations of the invention are subject matter of the dependent claims, the description and the figures.

A method according to the invention serves for warning the driver of a motor vehicle about the presence of an object in the surroundings of the motor vehicle, namely by displaying images of the surroundings on a display device of the motor vehicle. A camera image of the surroundings is captured by means of a camera of the motor vehicle, and the object is identified in the camera image, for instance by means of a detection algorithm. An expected trajectory of the motor vehicle is determined, in particular depending on a current steering angle of the motor vehicle. This current steering angle can for example be picked up on a communication bus of the motor vehicle (for instance the CAN bus). Then, based on the camera image, a display image is generated, which shows a superimposed optical representation of the expected trajectory. Then, the display image is represented on the display device. It is proposed to determine a current position of the object relative to the expected trajectory and to change or adjust the optical representation of the trajectory in the display image depending on the relative position.

Thus, the invention takes the way to draw the attention of the driver to the optical representation of the trajectory in the display image by changing the representation of the trajectory depending on the position of the object relative to the trajectory and thus also depending on the distance of the object from the motor vehicle. This has the advantage that the display image can be configured considerably simplified and thus more clearly with respect to the originally captured camera image. Thus, for example, the representation of the bounding boxes in the display image can be omitted. Namely, all of the relevant information is included in the optical representation of the expected trajectory. For example, those surface areas of the displayed trajectory can be optically highlighted, which represent the position of the object. Without having to display the bounding box of the object, the driver is reliably informed about the position of the object by means of the display device.

Thus, the display image represented on the display device consists of the camera image captured by the camera on the one hand and of a superimposed trajectory image on the other hand, which represents the expected trajectory of the vehicle. This overlayed trajectory image preferably contains no representation of the object alone, because the object is already depicted in the camera image which is represented on the display device together with the overlayed trajectory image. Preferably, the position of the object in the display image is marked by the optical representation of the trajectory. This can for example be configured such that a surface area of the trajectory corresponding to the position of the object is optically highlighted with respect to other surface areas or the remaining trajectory. This embodiment is particularly advantageous, because the position of the object is displayed in the display image solely by the optical representation of the trajectory, without the object itself having to be provided with a bounding box. Thus, the information content of the display image is set to a maximum with maximum clarity of the representation on the display device at the same time, and the representation on the display device is freed from superfluous elements. For identifying the object, thus, a detection algorithm can be used by which the object in the camera image is bounded by a bounding box, wherein the object depicted in the camera image is represented on the display device without the bounding box.

It proves particularly advantageous if the trajectory is subdivided in a plurality of cells and at least one of the cells is associated with the object for determining the relative position of the object with respect to the trajectory. This at least one cell then corresponds to the position of the object. In the optical representation of the trajectory in the display image, then, a surface area of the representation of the trajectory corresponding to the at least one associated cell can be optically highlighted with respect to other surface areas of the trajectory. In the display image on the display device, thus, that surface area of the trajectory is highlighted, which corresponds to the position of the object. Therefore, the driver is particularly reliably and persuasively informed about the respectively current position of the object. By subdividing the trajectory in individual cells, the display of the current position of the object on the display device can be discretized such that the effort in calculating the position is also minimized. By this subdivision, in addition, an always stable and solid display of the position of the object in the display image is possible. Therein, of course, the mentioned cells of the trajectory are not displayed in the display image on the display device; in particular, they are imagined - exclusively computationally present - cells serving for determining the position of the object relative to the trajectory. However, that surface area is highlighted on the display device, which corresponds to the associated or selected cell of the trajectory. In other words, only the selected cell - associated with the object - is optically represented on the display device.

Preferably, the trajectory is subdivided into at least two stripes in the transverse direction as well as into at least two rows in the longitudinal direction, such that by respective superimposed areas of the stripes and the rows, the plurality of cells is defined. In this embodiment, thus, the cells are formed by superimposed areas between stripes and rows of the trajectory. Thus, the position of the object can be displayed both in the transverse direction of the trajectory and in the longitudinal direction of the trajectory.

It can also be provided that an additional stripe is defined at least on one side of the trajectory, which is subdivided into further cells. These cells can adjoin to the rows of the trajectory, namely such that the rows of the trajectory are virtually extended by these additional cells. In the display image, thus, the position of an object located next to the trajectory is also marked. Preferably, this is effected by highlighting a surface area next to the representation of the trajectory in the display image, namely of that surface area, which corresponds to the position of the object next to the trajectory. Thus, the driver is also warned about objects located next to the trajectory.

In order to configure the representation of the trajectory in the display image as clearly as possible, the optical representation of the trajectory in the display image preferably is exclusively composed of lateral boundary lines and the highlighted surface area. In particular, the above mentioned cells are not represented in the display image. This increases the clarity of the representation compared to the prior art such that the attention of the driver is exclusively drawn to the relevant information.

The association of the at least one cell with the object can be performed as follows: For all of the cells, a superimposition value is respectively calculated, which describes a superimposition degree of the respective cell with the object. The at least one cell can then be associated with the object considering the superimposition values. This embodiment allows the association of the cell with the object with low computational effort.

Then, it can be checked if the superimposition values of the cells are larger than a preset first limit value. Those cells can be selected, the superimposition value of which is larger than the first limit value; other cells can be dismissed. For each row of the selected cells, the cell with the respectively largest superimposition value in the respective row can be selected. In addition, those adjacent cells of the same row, the superimposition value of which is larger than a preset second limit value higher than the first limit value can also be selected. The remaining cells can be dismissed. From the now selected cells, then, at least one cell can be associated with the object, and that surface area of the represented trajectory can be optically highlighted, which corresponds to the at least one associated cell. Thus, exclusively that surface area of the represented trajectory is respectively highlighted, which is particularly relevant with regard to the presence of the object. Other surface areas, the cells of which have a lower superimposition value with the object are not highlighted such that the clarity of the display image is further increased.

If plural cells of the same stripe are associated with one or more objects, exclusively that surface area of the represented trajectory can be highlighted in the display image, which corresponds to the cell of this stripe closest to the motor vehicle. In case of plural objects located on the same stripe of the trajectory, thus, exclusively the position of the object closest to the motor vehicle is displayed. Namely, only this object presents a potential risk to the motor vehicle, such that the highlighting of the surface areas of the trajectory farther away would only result in unnecessary reduction of the clarity.

It is particularly preferred if the expected trajectory of the motor vehicle is shown only up to the object, in particular only up to the first object closest to the motor vehicle in the display image. In particular, therefore, the lateral boundary lines of the trajectory are represented exclusively up to the object such that boundary lines are not shown behind the object anymore. The clarity of the display image is thus set to a maximum. So, in this embodiment, the trajectory is "cut off" behind the object, i.e. behind the highlighted cell, in order to clarify the content shown on the display device. The whole point of this embodiment is that a misinterpretation of the depth of the image is prevented, by the means of avoiding situations in which the overlaid trajectory lies over the object.

It proves advantageous if a colouring of the representation of the trajectory is adjusted depending on the distance of the object from the motor vehicle. This can be configured such that the colouring of the above mentioned surface area of the trajectory, which marks the position of the object, is adjusted depending on the distance of the object from the motor vehicle. Thus, the driver is made aware of in which distance the object is from the motor vehicle by corresponding colouring of the trajectory on the display device. The distance of the object from the motor vehicle can thus be realized by the driver in particularly simple manner with only one look to the display device.

Usually, cameras are employed in camera systems in motor vehicles, which have a relatively large capturing angle, which can be in a range of values from 90° to even 200°. The applied detection algorithms for identifying the object in the camera image are thus relatively computationally intensive because the entire image has to be examined or scanned for the presence of the object. In order to reduce the computing time in the detection of the objects, in an embodiment it is provided that a region of the camera image, to which a detection algorithm for identifying the object is applied, is defined depending on the expected trajectory. This embodiment is based on the insight that objects located far beyond the trajectory are less relevant to the safety and thus do not necessarily have to be detected. Instead, the detection algorithm is applied to a smaller region of the camera image, in which optionally objects are located. This region, in which the detection algorithm is applied, can for example include the expected trajectory of the motor vehicle.

The region of the camera image, to which the detection algorithm is applied, additionally or alternatively, can also be defined depending on the relative position of an object with respect to the trajectory. Thus, for example, such regions of the camera image do no longer have to be examined, which are located behind an already detected object and are therefore masked by this object. Hereby, the computing time is further reduced in detecting the objects.

The determination of the distance between the motor vehicle and the object is preferably effected exclusively based on the camera images of the camera. This in particular means that further distance sensors are not required in order to estimate the distance of the object and to identify the object. This distance can be determined solely based on the camera images - namely in particular based on the above mentioned cells.

However, alternatively, it can also be provided that the distance of the object is determined or else at least made plausible by means of a sensor, namely for example with the aid of an ultrasonic sensor and/or a radar device and/or a Lidar sensor and the like.

The invention additionally relates to a camera system for a motor vehicle. The camera system is configured for performing a method according to the invention.

A motor vehicle according to the invention includes a camera system according to the invention.

The preferred embodiments presented with respect to the method according to the invention and the advantages thereof correspondingly apply to the camera system according to the invention as well as to the motor vehicle according to the invention.

Further features of the invention are apparent from the claims, the figures and the description of figures. All of the features and feature combinations mentioned above in the description as well as the features and feature combinations mentioned below in the description of figures and/or shown in the figures alone are usable not only in the respectively specified combination, but also in other combinations or else alone.

Now, the invention is explained in more detail based on a preferred embodiment as well as with reference to the attached drawings.

Therein show:

Fig. 1            in schematic illustration a side view of a motor vehicle with a camera system according to an embodiment of the invention;

Fig. 2            in schematic illustration an exemplary camera image with detected objects;

Fig. 3            in schematic illustration the motor vehicle with an expected trajectory, wherein a method according to an embodiment of the invention is explained in more detail;

Fig. 4 to 11      each a camera image, wherein the determination of the position of an object relative to the trajectory is explained in more detail;

Fig. 12 and 13    in schematic illustration each a display image at different steering angles of the motor vehicle and thus with different expected trajectories; and

Fig. 14 to 18     in schematic illustration a plurality of images, based on which it is explained how the computing time can be reduced in the detection of objects.

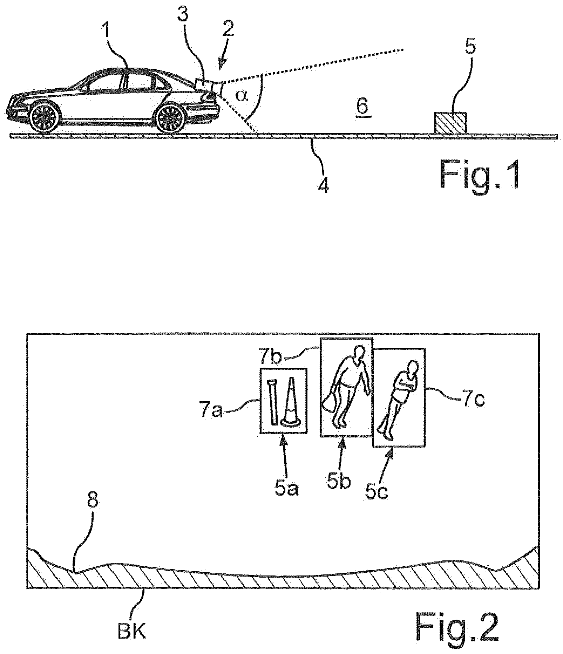

In Fig. 1, in schematic illustration, a side view of a motor vehicle 1 according to an embodiment of the invention is illustrated. The motor vehicle 1 is a passenger car in the embodiment. It has a camera system 2, which includes a camera 3. The motor vehicle 1 is on a road 4, on which an object or obstacle 5 is also present.

The camera system 2 is a collision warning system and serves for warning the driver of the motor vehicle 1 about the object 5 located in surroundings 6 of the motor vehicle 1. Therein, camera images are captured by means of the camera 3, which are subsequently processed by means of a computing device (digital signal processor) not illustrated in more detail. The computing device also receives information about the respectively current steering angle of the motor vehicle 1 and is able to determine the expected trajectory of the motor vehicle 1 depending on this steering angle. The information about the steering angle is for example picked up on the CAN bus. However, a parking path can also be understood as the expected trajectory, which is calculated by a parking assist system of the motor vehicle 1 and along which the motor vehicle 1 is parked into a parking space. The expected trajectory is thus very generally a driving path, which is prospectively travelled by the motor vehicle 1.

The computing device of the camera system 2 thus receives the captured camera images on the one hand and also determines the trajectory of the motor vehicle 1 on the other hand. The computing device can generate display images from the camera images, which are represented on a not illustrated display device (display) of the motor vehicle 1. The display device can for example be disposed on a centre console of the motor vehicle 1 in the interior. The display images are generated based on the camera images and also include an optical representation of the expected trajectory of the motor vehicle 1. This means that the expected trajectory is projected onto the represented images. In other words, the trajectory is superimposed on the represented images.

The camera 3 has a capturing angle α, which can for example be in a range of values from 90° to 200°.

In the embodiment, the camera 3 is disposed in a rear region of the motor vehicle 1 and captures a region of the surroundings behind the motor vehicle 1. However, the invention is not limited to such an arrangement of the camera 3. The arrangement and the number of cameras of the camera system 2 can be different according to embodiment. For example, a camera can also be disposed in a front region of the motor vehicle 1 and capture the region of the surroundings in front of the motor vehicle 1.

Therefore, the camera system 2 represents an object detection system, by means of which objects 5 in the surroundings 6 of the motor vehicle 1 are detected such that the driver can be warned about these objects, namely by means of the display device. Information is represented on the display device, by which the driver is made aware of whether or not the detected object 5 is on the expected trajectory.

Therein, the camera 3 is a video camera continuously capturing a sequence of frames. Thus, a continuous sequence of display images is also represented on the display device, which overall result in a video. The surroundings 6 with the superimposed trajectory are thus represented on the display device and adapted in real time.

A particular challenge is now in representing such display images on the display device, which are particularly clear altogether and exclusively include the relevant information. Therein, all of the irrelevant information is not to be represented. In particular, the respectively current position of the object 5 with respect to the expected trajectory and thus also with respect to the motor vehicle 1 is to be represented in the display images.

Detection algorithms serving for identifying an object 5 in a captured camera image are basically prior art and thus are not described in more detail below. Such detection algorithms can detect a plurality of relevant objects or obstacles in the camera images like in particular pedestrians and other motor vehicles. A property of known detection algorithms (see for example JP 2011/119917 A) is a bounding box, by which the identified object 5 is surrounded in the image. An example of a camera image BK, which can be output by a detection algorithm, is illustrated in Fig. 2. In this image, a plurality of objects 5a, 5b, 5c is represented, which each are provided with a bounding box 7a, 7b, 7c. In the lower region of the image BK, a bumper 8 of the motor vehicle 1 is imaged.

From such a camera image, as it is illustrated in Fig. 2, then, a display image is generated, which additionally shows a superimposed representation of the expected trajectory. The display image is mainly based on the expected trajectory and is dynamically adapted if the current steering angle and thus also the expected trajectory change.

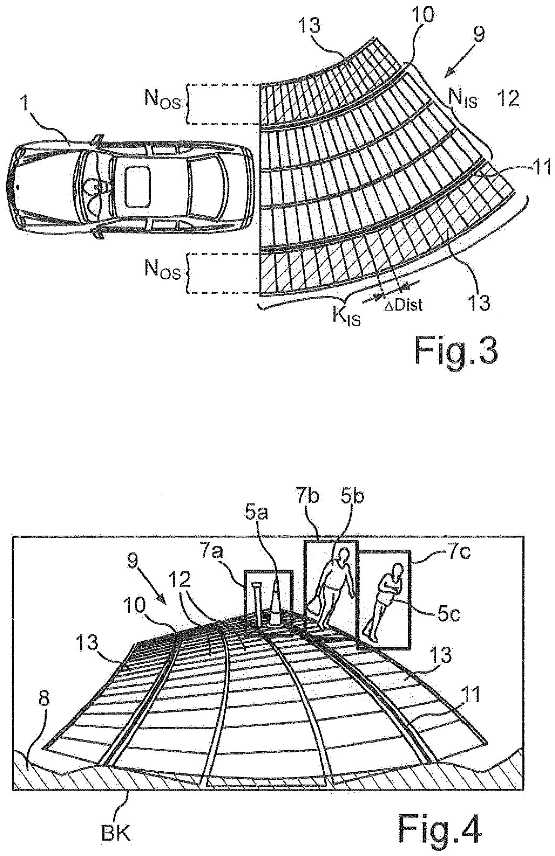

From the current steering angle, thus, the expected trajectory is determined in global or geographic coordinates of the motor vehicle 1. An exemplary expected trajectory 9 is illustrated in Fig. 3. It is not a camera image, but only data present in the computing device. The expected trajectory 9 is defined by two boundary lines 10, 11 in the computing device, wherein the entire area between the boundary lines 10, 11 constitutes the trajectory 9. Now, the position of the detected object 5 relative to the trajectory 9 is determined by means of the computing device. To this, the trajectory 9 is subdivided into a plurality of cells 12. The trajectory 9 is subdivided into a plurality of stripes $N_{IS}$ in the transverse direction - in the embodiment into three stripes $N_{IS}$. At the same time, the trajectory 9 is subdivided in the longitudinal direction into a plurality of rows $K_{IS}$ each having a predefined width $\Delta$Dist. This width $\Delta$Dist is preset in real global world coordinates such that a predetermined resolution is achieved in determining the position of the object. The length of the trajectory 9 can be constant or it can be dynamically adapted, for instance depending on the current velocity of the motor vehicle 1.

Thus, the cells 12 of the trajectory 9 are constituted of superimposed areas of the stripes $N_{IS}$ as well as the rows $K_{IS}$. Next to the trajectory 9 - on both sides of the trajectory 9 - an additional stripe $N_{OS}$ is also respectively defined, which is subdivided into a plurality of corresponding cells 13 analogously to the stripes $N_{IS}$. Thus, additional cells 13 are defined, namely next to the trajectory 9.

The width $\Delta$Dist of the cells 12, 13 can for example be 0.25 m.

The trajectory 9 with the additional cells 13 is then converted into the coordinates of the camera system 2 - i.e. into coordinates of the camera images. A camera image BK with the detected objects 5a, 5b, 5c as well as with the cells 12 and 13 is exemplarily illustrated in Fig. 4. In order to determine the position of the objects 5a, 5b, 5c relative to the trajectory 9 and thus relative to the motor vehicle 1 solely based on the camera image BK, first, a superimposition value W is respectively calculated for all cells 12, 13, namely according to the formula:

$$W = \frac{C \cap B}{C},$$

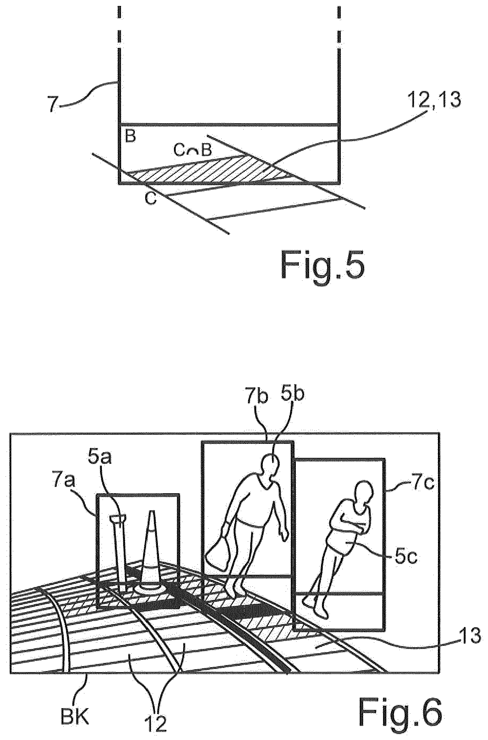

wherein C denotes the area of the respective cell 12, 13 and B denotes the area of a lower region of the respective bounding box 7a, 7b, 7c. These quantities are illustrated in more detail in Fig. 5. The common area of C and B is illustrated shaded in Fig. 5. This common area is then divided by the area C of the cell 12, 13 such that the superimposition value W can be in a range of values from 0 to 1. In practice, the area C of the cell 12, 13 can also be approximated by a rectangle in order to simplify the calculation of the superimposition value W.

Thus, the respective superimposition value W is calculated for each cell 12, 13. Then, those cells are selected from all of the cells 12, 13, the superimposition value W of which is larger than a preset limit value T1. This limit value T1 can for example be in a range of values from 15% to 30%. For example, it can be 20%. In each row $K_{IS}$, that cell 12, 13 is then respectively selected, which has the largest superimposition value W in this row $K_{IS}$. In addition, those adjacent cells 12, 13 are also selected in this row, the superimposition value of which is larger than a second limit value T2 greater than T1. The remaining cells are dismissed. Thus, in all of the rows $K_{IS}$, first, the cell 12, 13 with the largest superimposition value W as well as also those immediately adjacent cells 12, 13 of the same row are selected, the superimposition value of which is larger than T2.

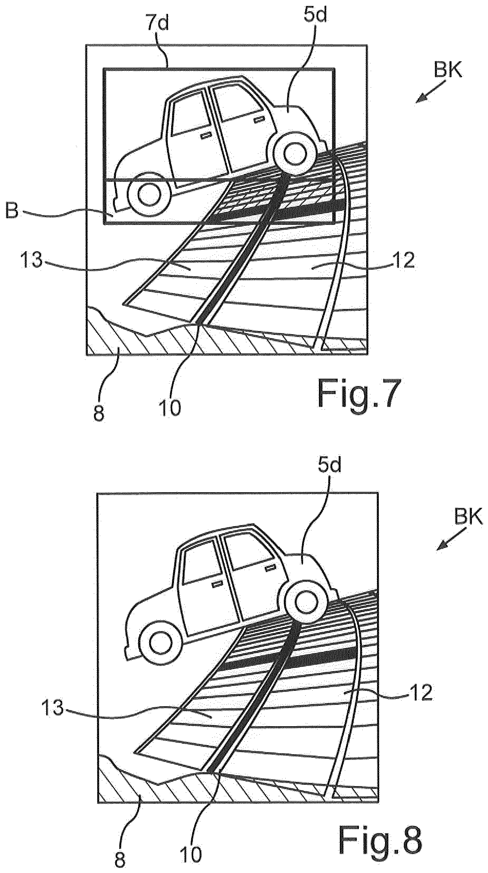

However, if a cell 12, 13 is selected in a certain row, thus, all of the cells 12, 13 located farther, which belong to the same stripe $N_{IS}$, are dismissed. In Fig. 7, an exemplary camera image BK is illustrated, in which the selected cells 12, 13 are marked in black. The cells 12, 13 with a superimposition value W=0 are illustrated in white. In contrast, in Fig. 7, those cells 12, 13, which have a superimposition value W>0, but this superimposition value W is smaller than the limit values T1 and T2 or else they are not the respectively closest cells of a stripe, are illustrated shaded.

In Fig. 6, a cell 12 is selected for the object 5a (illustrated in black), and a cell 13 is also selected for the object 5b (illustrated in black). In contrast, the object 5c is outside of the cells 12, 13. Superimposition between the bounding box 7c and one of the cells 13 (illustrated shaded) exists, such that the superimposition value is W>0, but this superimposition value W is smaller than the limit values T1 and T2. Thus, a cell is not selected for the object 5c.

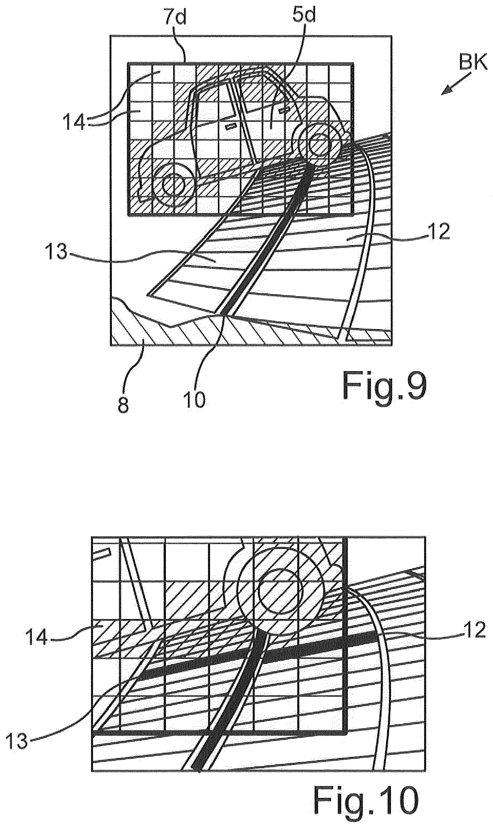

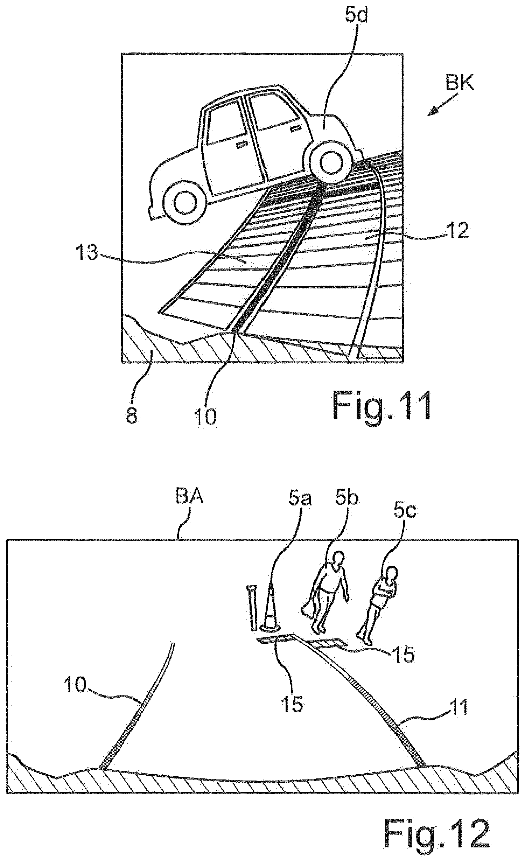

However, problems can occur in this approach, namely if an object 5 is detected, which is located obliquely or diagonally in the camera image BK. Such a situation is illustrated in Fig. 7. An object 5d is detected, which is obliquely oriented in the camera image BK. The associated bounding box 7d is thus relatively high such that this bounding box 7d surrounds the entire object 5d. If a superimposition value W between the lower region B of the bounding box 7d and the cells 12, 13 is calculated, thus, cells are selected (illustrated in black), which are located relatively far from the object 5d. This camera image BK is illustrated in Fig. 8 without the bounding box 7d. In order to prevent such highlighting of the selected cells 12, 13, which are too far away from the object 5d, it is optionally proposed to also subdivide the entire region within the bounding box 7d into a plurality of cells 14, which is schematically and exemplarily illustrated in Fig. 9. Preferably, this concerns only the case where the detection algorithm can provide such a sub-division of the bounding box into several cells; thus, the division of the bounding box into plurality of cells is a possible option, but not a necessity. These cells 14 can for example be individual pixels or cells 14 can be defined, which are each composed of plural pixels. Then, those cells 14 are used for determining the position of the object 5d, which each image an edge of the object 5d - or at least a region of the object 5d. Thus, the bounding box 7d is not considered, but solely the discretized object 5d. Accordingly, only the cells 14 of the image of the object 5d illustrated shaded in Fig. 9 are used for calculating the above mentioned superimposition value W. The result is illustrated in Fig. 10 and 11; those cells 12, 13 of the trajectory are selected (marked in black in Fig. 10), which are substantially closer to the object 5d than the selected cells according to Fig. 7 or Fig. 8. Overall, thus, the determination of the position of the object 5d becomes more precise. The result is also illustrated in Fig. 11.

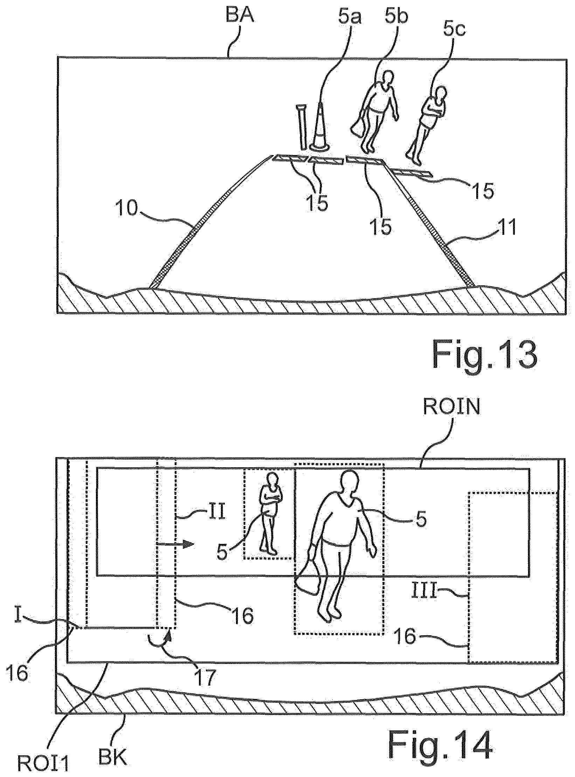

Finally, such cells 12, 13 are selected, which correspond to the position of the object 5. Now, the generation of a display image from the camera image BK is effected, wherein the display image also shows a superimposed graphical representation of the trajectory 9. An exemplary display image BA is illustrated in Fig. 12 for a steering angle of -400°. In contrast, the display image BA for a steering angle of 200° is illustrated in Fig. 13. As is apparent from Fig. 12, 13, on the display device - in the display image BA - the trajectory 9 is exclusively represented by the boundary lines 10, 11 as well as by surface areas 15. Therein, the individual cells 12, 13 are not represented. Therein, the surface areas 15 correspond to the selected cells 12, 13; this means that the position of the surface areas 15 corresponds to the position of the corresponding cells 12, 13. As an advantage, the representation of the bounding boxes associated with the objects 5a, 5b, 5c in the display image BA is omitted.

Therefore, overall, a clear display image BA is represented to the driver on the display device, in which the position of the respective objects 5a, 5b, 5c is represented by the surface areas 15. Therein, the colouring of the surface areas 15 can also be adjusted depending on the distance from the motor vehicle 1. Relatively far surface areas 15 can be represented in green, while slightly closer surface areas 15 can be represented in yellow and the still closer surface areas 15 can be represented in red.

The boundary lines 10, 11 can also be represented with a corresponding colouring. A first region of the boundary lines 10, 11, which is closest to the motor vehicle, can be represented in red in the display image BA (see cross-shading in Fig. 12, 13). A farther region of the boundary lines 10, 11 (simple line shading) can be represented in yellow. The still farther region (no shading) of the boundary lines 10, 11 can be represented in green. Therein, the transitions of the colours can be designed without jump, thus continuously from red to green.

It is also provided that - as especially shown in fig. 12 - the trajectory, which means the boundary lines 10, 11 are "cut off" behind the highlighted area 15 in order to clarify the displayed image on the display device. Thus, a misinterpretation of the depth of the image can be prevented, since situations can be prevented in which the overlaid trajectory lies over the areas 15 in the image. In order to achieve this, it is first checked, whether there is an intersection between the boundary lines 10, 11 and the bounding box of the object 5. If such an intersection exists, the trajectory in the image BA is interrupted at the level of the highlighted area 15. If, on the other hand, a plurality of such intersections is detected, the trajectory is interrupted at the smallest distance from the motor vehicle. At this point it is pointed out that, due to the lack of stability of the size and the position of the bounding box, the trajectory does not necessarily has to be interrupted exactly at the intersection, in order to gain better results.

It can also be provided that the trajectory displayed and especially the highlighted surface areas 15 can be represented with the correct perspective so that correct visual distance information can be achieved. The optical representation of the trajectory is preferably obtained by projecting the trajectory which is computed by using a "pin-hole" model to represent the camera parameters, such as focal, position and the like. Using correctly the perspective will for instance give a bigger size of the closest cells in the display image BA, which contributes to give correct distance information to the driver.

As already explained, the camera 3 has a relatively wide capturing angle a, which can even be 190°. In addition, usually, detection algorithms are used for identifying the objects 5 in the camera image, which use a so-called scan window, by which the captured camera image BK is "scanned". In such an algorithm, the entire content of the scan window is examined with respect to the objects 5, and the scan window is moved from a first position in the camera image BK to another position. Usually, the scan window is moved from an initial position in the camera image BK in individual steps up to a final position, and in each step, the content of the scan window is examined. Therein, each position of the scan window is defined by (x,y,s), wherein (x,y) denotes the coordinate of the left upper corner of the scan window and s denotes the size of the scan window. Usually, the scan window is moved horizontally from left to right. An exemplary camera image BK is illustrated in Fig. 14. In the camera image BK, so-called regions of interest ROI are defined, in which objects 5 are searched for. For example, a first region ROI 1 is examined. A scan window 16 is first in an initial position I, namely in the upper left corner region of the region ROI 1. From this initial position I, the scan window 16 is moved further according to the arrow representation 17 by one step, namely into a second position II. The last position of the scan window 16 is denoted by III in Fig. 14. Thus, the entire region ROI 1 is examined for the presence of predetermined obstacles or objects 5. Then, a further region ROI N can be defined, which is scanned by means of a further - here smaller - scan window and examined with respect to objects 5. Therein, the size of the scan window is proportional to the size of the respective region ROI.

The region of interest ROI is for example a rectangle.

The computing time is proportional to the number of the positions of the scan window 16, thus basically also to the size of the region of interest ROI.

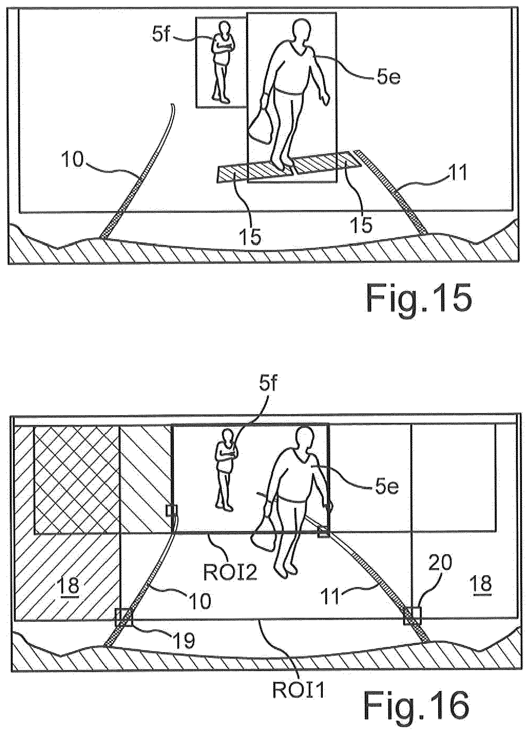

Now, it has turned out that an object located behind another object on the same stripe $N_{IS}$ is little relevant to the representation on the display device. Such a situation is illustrated in Fig. 15. In the image, a first pedestrian 5e as well as a second pedestrian 5f are represented, wherein the second pedestrian 5f is located behind the first pedestrian 5e on the same stripe of the trajectory 9. Therein, the pedestrian 5f is standing on a stripe $N_{IS}$, on which already two surface areas 15 are highlighted, which are closer to the motor vehicle 1. Thus, a surface area 15 is not highlighted to the second pedestrian 5f. In addition, regions of the image are also irrelevant which are farther from the trajectory 9. In order to reduce the computing time to a minimum, the following is proposed:

First, it is proposed to reduce the size of the region of interest ROI, in which the scan window 16 is moved and the objects 5 are searched for. Thus, certain positions are excluded, which are little relevant to the safety. This region of interest ROI is therein defined depending on the trajectory 9, thus depending on the current steering angle.

With reference to Fig. 16, regions 18 are excluded from the examination, which are located next to the additional cells 13 and farther from the trajectory 9. The scan window 16 is only moved in relevant regions ROI 1 and ROI 2, which include the entire trajectory 9 and the additional cells 13. Therein, lower corners 19, 20 of the respective region ROI 1 and ROI 2 coincide with the boundary lines 10, 11.

In order to detect objects in different distances from the motor vehicle 1, different regions of interest ROI are used. In Fig. 16, a first region ROI 1 is illustrated, the lower corners 19, 20 of which coincide with the respective boundary lines 10, 11. In this region ROI 1, a relatively large scan window 16 is used to detect the objects, which are relatively close and thus also relatively large in the camera image. Then, a further smaller region ROI 2 can be used, the lower corners of which also coincide with the boundary lines 10, 11. In this region ROI 2, a smaller scan window 16 can be used, because the farther objects 5 are smaller in the captured images.

A further possibility for reducing the computing time is to determine the order of the positions of the scan window 16 according to predetermined rules. First, regions of the image are analyzed, in which the closest objects can be. If an object 5 is detected in this region, thus, the region of the image behind this object 5 does not have to be scanned anymore with the aid of the scan window 16. The closest objects 5 are therein usually imaged in the lower region of the camera image such that this lower region of the image can be first examined.

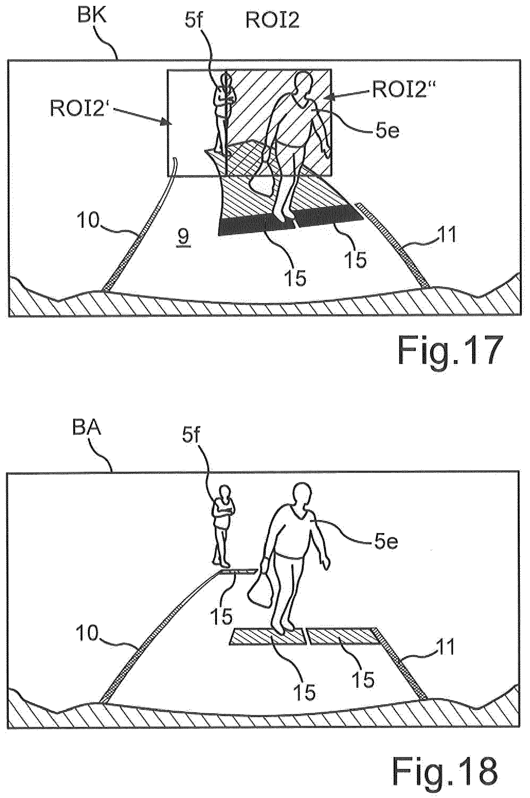

This is explained in more detail with reference to Fig. 17. In a first region of interest ROI 1 (see Fig. 16), the first pedestrian 5e is identified. Then, the surface areas 15 of the trajectory 9 are highlighted, which are associated with the first pedestrian 5e. On the same stripe $N_{IS}$, further surface areas behind the pedestrian 5a are not highlighted. The entire region of the two right stripes $N_{IS}$ behind the pedestrian 5e is therefore irrelevant. If the second pedestrian 5f is searched for in a second region ROI 2, thus, the original region ROI 2 can be subdivided into a first region ROI 2' as well as a second region ROI 2" (illustrated shaded). While the region ROI 2" is irrelevant because this region is behind the first pedestrian 5e on the same stripe, the region ROI 2' is relevant with respect to objects present there. Instead of searching for possible objects in the entire region ROI 2, the objects are exclusively searched for in the region ROI 2'. Namely, this region ROI 2' can include objects located on the left stripe $N_{IS}$ such that optionally further surface areas 15 can be highlighted. The region ROI 2' is therefore defined depending on the position of the first pedestrian 5e.

The representation on the display device is dynamically adapted in real time - as explained. For example, if the current steering angle is changed, thus, the representation of the expected trajectory 9 on the display device is also adapted. With reference to Fig. 17 and 18, thus, it can also occur that an initially irrelevant object (the second pedestrian 5f) is no longer in the irrelevant region behind the first pedestrian 5e after change of the steering angle, but is in a relevant region on the left stripe $N_{IS}$. As is apparent form Fig. 18, then, the surface area 15 is highlighted, which is associated with the second pedestrian 5f. This surface area 15 thus represents the position of the second pedestrian 5f.

## Claims

1. A method for warning the driver of a motor vehicle (1) about the presence of an object (5) in the surroundings (6) of the motor vehicle (1) by displaying images (BA) of the surroundings (6) on a display device of the motor vehicle (1), comprising the steps of:

   - capturing a camera image (BK) of the surroundings (6) by means of a camera (3) of the motor vehicle (1) and identifying the object (5) in the camera image (BK)
   - determining an expected trajectory (9) of the motor vehicle (1), in particular in dependency on a current steering angle of the motor vehicle (1), wherein said expected trajectory (9) is represented by a first boundary line (10) and a second boundary line (11)
   - defining a region of interest (ROI) in said camera image (BK), wherein said region of interest (ROI) comprises a first lower corner (19) and a second lower corner (20) and said first lower corner (19) coincides with said first boundary line (10) and said second lower corner coincides with said second boundary line (11).
   - searching for said object (5) in said region of interest (ROI),
   - generating a display image (BA) based on the camera image (BK), wherein the display image (BA) shows a superimposed optical representation of the expected trajectory (9), and displaying the display image (BA) on the display device,
   - determining a current position of the object (5) relative to the expected trajectory (9) and
   - changing the optical representation of the trajectory (9) in the display image (BA) in dependency on the relative position of the object (5) with respect to the trajectory (9).

**2.** The method according to claim 1, **characterized in that** for identifying the object (5) a detection algorithm is used by which the object (5) in the camera image (BK) is bounded by a bounding box (7), wherein the object (5) depicted in the camera image (BK) is represented on the display device without the bounding box (7).

**3.** The method according to claim 1 or 2, **characterized in that** in the display image (BA), the position of the object (5) in the display image (BA) is marked by the optical representation of the trajectory (9).

**4.** The method according to any one of the preceding claims, **characterized in that** for determining the relative position of the object (5) relative to the trajectory (9) the trajectory (9) is subdivided into a plurality of cells (12) and at least one of the cells (12) is associated with the object (5), wherein in the optical representation of the trajectory (9) a surface area (15) of the representation of the trajectory (9) corresponding to the at least one associated cell (12) is highlighted against other surface areas of the trajectory (9).

**5.** The method according to claim 4, **characterized in that** the trajectory (9) is subdivided in the transverse direction into at least two stripes ($N_{IS}$) and in the longitudinal direction into at least two rows ($K_{IS}$), wherein by respective superimposed areas of the stripes ($N_{IS}$) and the rows ($K_{IS}$) a plurality of cells (12) are defined.

**6.** The method according to claim 4 or 5, **characterized in that** at least on one side of the trajectory (9) an additional stripe is defined and subdivided into further cells (13), so that in the display image (BA) also the position of an object (5) present next to the trajectory (9) is marked.

**7.** The method according to any one of claims 4 to 6, **characterized in that** the optical representation of the trajectory (9) in the display image (BA) exclusively consists of lateral boundary lines (10, 11) and the highlighted surface area (15).

**8.** The method according to any one of claims 4 to 7, **characterized in that** the association of the at least one cell (12) with the object (5) comprises that for each of the cells (12) a superimposition value (W) is calculated, which describes a superimposition degree of the respective cell (12) with the object (5), wherein in dependency on the superimposition values (W) the at least one cell (12) is associated with the object (5).

**9.** The method according to claim 8, **characterized by**

- checking whether the superimposition values (W) of the cells (12) are larger than a predetermined first limit value (T1),
- selecting the cells (12) the superimposition value (W) of which is larger than the first limit value (T1), and dismissing the remaining cells (12),
- for each row ($K_{IS}$) of selected cells (12) selecting the cell (12) with the largest superimposition value (W) in the respective row ($K_{IS}$) and selecting the adjacent cells (12) of the same row ($K_{IS}$) the superimposition value (W) of which is larger than a predetermined second limit value (T2), which is larger than the first limit value (T1), and dismissing the remaining cells (12) and
- associating at least one of the selected cells (12) with the object (5) and optical highlighting of the surface area (15) of the represented trajectory (9) which corresponds to the at least one associated cell (12).

**10.** The method according to any one of claims 4 to 9, **characterized in that** in case one or several objects (5) are associated with several cells (12) of the same stripe ($N_{IS}$), exclusively the surface area (15) of the represented trajectory (9) in the display image (BA) is highlighted, which corresponds to the cell (12) closest to the motor vehicle (1).

**11.** The method according to any one of the preceding claims, **characterized in that** the expected trajectory (9) of the motor vehicle (1) in the display image (BA) is represented only up to the object (5).

**12.** The method according to any one of the preceding claims, **characterized in that** a colouring of the representation of the trajectory (9) is set in dependency on a distance of the object (5) from the motor vehicle (1).

**13.** The method according to any one of the preceding claims, **characterized in that** a region (ROI) of the camera image (BK) to which the detection algorithm for identifying the object (5) is applied is defined in dependency on the relative position of an object (5) relative to the trajectory (9).

**14.** A camera system (2) for a motor vehicle (1), wherein the camera system (2) is configured for performing a method according to any one of claims 1 to 13.

15. A motor vehicle (1) comprising a camera system (2) according to claim 14.

**Patentansprüche**

1. Verfahren, um den Fahrer eines Kraftfahrzeugs (1) über die Anwesenheit eines Gegenstandes (5) in der Umgebung (6) des Kraftfahrzeugs (1) durch Anzeigen von Bildern (BA) der Umgebung (6) auf einer Anzeigevorrichtung des Kraftfahrzeugs (1) zu warnen, das die folgenden Schritte umfasst:

- Erfassen eines Kamerabildes (BK) der Umgebung (6) mittels einer Kamera (3) des Kraftfahrzeugs (1) und Identifizieren des Gegenstands (5) im Kamerabild (BK),
- Bestimmen einer erwarteten Bahn (9) des Kraftfahrzeugs (1), insbesondere in Abhängigkeit von einem gegenwärtigen Lenkwinkel des Kraftfahrzeugs (1), wobei die erwartete Bahn (9) durch eine erste Abgrenzungslinie (10) und eine zweite Abgrenzungslinie (11) repräsentiert wird,
- Definieren eines Bereichs von Interesse (ROI) im Kamerabild (BK), wobei der Bereich von Interesse (ROI) eine erste untere Ecke (19) und eine zweite untere Ecke (20) umfasst und die erste untere Ecke (19) mit der ersten Abgrenzungslinie (10) übereinstimmt und die zweite untere Ecke mit der zweiten Abgrenzungslinie (11) übereinstimmt,
- Suchen des Gegenstands (5) im Bereich von Interesse (ROI),
- Erzeugen eines Anzeigebildes (BA) auf der Grundlage des Kamerabildes (BK), wobei das Anzeigebild (BA) eine überlagerte optische Darstellung der erwarteten Bahn (9) zeigt, und Anzeigen des Anzeigebildes (BA) auf der Anzeigevorrichtung,
- Bestimmen einer gegenwärtigen Position des Gegenstands (5) in Bezug zur erwarteten Bahn (9) und
- Ändern der optischen Darstellung der Bahn (9) im Anzeigebild (BA) abhängig von der relativen Position des Gegenstands (5) in Bezug auf die Bahn (9).

2. Verfahren nach Anspruch 1,
**dadurch gekennzeichnet, dass**
zum Identifizieren des Gegenstands (5) ein Detektionsalgorithmus verwendet wird, durch den der Gegenstand (5) im Kamerabild (BK) durch einen Begrenzungsrahmen (7) begrenzt wird, wobei der Gegenstand (5), der im Kamerabild (BK) dargestellt ist, auf der Anzeigevorrichtung ohne den Begrenzungsrahmen (7) repräsentiert wird.

3. Verfahren nach Anspruch 1 oder 2,
**dadurch gekennzeichnet, dass** im Anzeigebild (BA) die Position des Gegenstands (5) im Anzeigebild (BA) durch die optische Darstellung der Bahn (9) markiert wird.

4. Verfahren nach einem der vorhergehenden Ansprüche,
**dadurch gekennzeichnet, dass**
zum Bestimmen der relativen Position des Gegenstands (5) in Bezug auf die Bahn (9) die Bahn (9) in mehrere Zellen (12) unterteilt wird und mindestens eine der Zellen (12) dem Gegenstand (5) zugeordnet wird, wobei in der optischen Darstellung der Bahn (9) ein Oberflächenbereich (15) der Darstellung der Bahn (9), der der mindestens einen zugeordneten Zelle (12) entspricht, gegenüber weiteren Oberflächenbereichen der Bahn (9) hervorgehoben wird.

5. Verfahren nach Anspruch 4,
**dadurch gekennzeichnet, dass**
die Bahn (9) in der Querrichtung in mindestens zwei Streifen ($N_{IS}$) und in der Längsrichtung in mindestens zwei Zeilen ($K_{IS}$) unterteilt wird, wobei durch jeweilige überlagerte Bereiche der Streifen ($N_{IS}$) und der Reihen ($K_{IS}$) mehrere Zellen (12) definiert werden.

6. Verfahren nach Anspruch 4 oder 5,
**dadurch gekennzeichnet, dass**
mindestens auf einer Seite der Bahn (9) ein zusätzlicher Streifen definiert und in weitere Zellen (13) unterteilt wird, derart, dass im Anzeigebild (BA) außerdem die Position eines Gegenstands (5), der neben der Bahn (9) vorhanden ist, markiert wird.

7. Verfahren nach einem der Ansprüche 4 bis 6,
**dadurch gekennzeichnet, dass**
die optische Darstellung der Bahn (9) im Anzeigebild (BA) ausschließlich aus seitlichen Begrenzungslinien (10, 11) und dem hervorgehobenen Oberflächenbereich (15) besteht.

8. Verfahren nach einem der Ansprüche 4 bis 7,
**dadurch gekennzeichnet, dass**
die Zuordnung der mindestens einen Zelle (12) zum Gegenstand (5) umfasst, dass für jede der Zellen (12) ein Überlagerungswert (W) berechnet wird, der einen Überlagerungsgrad der entsprechenden Zelle (12) mit dem Gegenstand (5) beschreibt, wobei die mindestens eine Zelle (12) abhängig von den Überlagerungswerten (W) dem Gegenstand (5) zugeordnet wird.

9. Verfahren nach Anspruch 8,
**gekennzeichnet durch**

- Prüfen, ob die Überlagerungswerte (W) der Zellen (12) größer als ein vorgegebener erster Grenzwert (T1) sind,
- Wählen der Zellen (12), deren Überlagerungswert (W) größer als der erste Grenzwert (T1) ist, und Verwerfen der verbleibenden Zellen (12),
- für jede Zeile ($K_{IS}$) gewählter Zellen (12) Wählen der Zelle (12) mit dem größten Überlagerungswert (W) in der entsprechenden Zeile ($K_{IS}$) und Wählen der benachbarten Zellen (12) derselben Zeile ($K_{IS}$), deren Überlagerungswert (W) größer als ein vorgegebener zweiter Grenzwert (T2), der größer als der erste Grenzwert (T1) ist, ist, und Verwerfen der verbleibenden Zellen (12) und
- Zuordnen mindestens einer der gewählten Zellen (12) zum Gegenstand (5) und optisches Hervorheben des Oberflächenbereichs (15) der dargestellten Bahn (9), der der mindestens einen zugeordneten Zelle (12) entspricht.

10. Verfahren nach einem der Ansprüche 4 bis 9, **dadurch gekennzeichnet, dass** dann, wenn ein oder mehrere Gegenstände (5) mehreren Zellen (12) desselben Streifens ($N_{IS}$) zugeordnet sind, ausschließlich der Oberflächenbereich (15) der dargestellten Bahn (9) im Anzeigebild (BA) hervorgehoben wird, der der Zelle (12) entspricht, die dem Kraftfahrzeug (1) am nächsten ist.

11. Verfahren nach einem der vorhergehenden Ansprüche, **dadurch gekennzeichnet, dass** die erwartete Bahn (9) des Kraftfahrzeugs (1) im Anzeigebild (BA) lediglich bis zum Gegenstand (5) dargestellt wird.

12. Verfahren nach einem der vorhergehenden Ansprüche, **dadurch gekennzeichnet, dass** eine Färbung der Bahn (9) abhängig von einer Entfernung des Gegenstands (5) vom Kraftfahrzeug (1) eingestellt wird.

13. Verfahren nach einem der vorhergehenden Ansprüche, **dadurch gekennzeichnet, dass** ein Bereich (ROI) des Kamerabildes (BK), auf den ein Detektionsalgorithmus zum Identifizieren des Gegenstands (5) angewandt wird, abhängig von der relativen Position eines Gegenstands (5) in Bezug auf die Bahn (9) definiert wird.

14. Kamerasystem (2) für ein Kraftfahrzeug (1), wobei das Kamerasystem (2) konfiguriert ist, ein Verfahren nach einem der Ansprüche 1 bis 13 durchzuführen.

15. Kraftfahrzeug (1), das ein Kamerasystem (2) nach Anspruch 14 umfasst.

**Revendications**

1. Procédé pour avertir le conducteur d'un véhicule à moteur (1) de la présence d'un objet (5) dans l'environnement (6) du véhicule à moteur (1) en affichant des images (BA) de l'environnement (6) sur un dispositif d'affichage du véhicule à moteur (1), comprenant les étapes suivantes :

- capturer une image de caméra (BK) de l'environnement (6) au moyen d'une caméra (3) du véhicule à moteur (1) et identifier l'objet (5) dans l'image de caméra (BK),
- déterminer une trajectoire attendue (9) du véhicule à moteur (1), en particulier en fonction d'un angle de braquage courant du véhicule à moteur (1), ladite trajectoire attendue (9) étant représentée par une première ligne de délimitation (10) et une seconde ligne de délimitation (11),
- définir une région d'intérêt (ROI) dans ladite image de caméra (BK), où ladite région d'intérêt (ROI) comprend un premier coin inférieur (19) et un second coin inférieur (20), et ledit premier coin inférieur (19) coïncide avec ladite première ligne de délimitation (10) et ledit second coin inférieur coïncide avec ladite seconde ligne de délimitation (11),
- rechercher ledit objet (5) dans ladite région d'intérêt (ROI),
- générer une image d'affichage (BA) sur la base de l'image de caméra (BK), l'image d'affichage (BA) présentant une représentation optique superposée de la trajectoire attendue (9), et afficher l'image d'affichage (BA) sur le dispositif d'affichage,
- déterminer une position courante de l'objet (5) par rapport à la trajectoire attendue (9) et
- modifier la représentation optique de la trajectoire (9) dans l'image d'affichage (BA) en fonction de la position relative de l'objet (5) par rapport à la trajectoire (9) .

2. Procédé selon la revendication 1, **caractérisé en ce que** :

pour identifier l'objet (5), un algorithme de détection est utilisé, algorithme par lequel l'objet (5) dans l'image de caméra (BK) est délimité par un cadre de délimitation (7), l'objet (5) représenté dans l'image de caméra (BK) étant représenté sur le dispositif d'affichage sans le cadre de délimitation (7).

3. Procédé selon la revendication 1 ou la revendication 2,
**caractérisé en ce que**, dans l'image d'affichage (BA), la position de l'objet (5) dans l'image d'affichage (BA) est marquée par la représentation optique de la trajectoire (9).

4. Procédé selon l'une quelconque des revendications précédentes,
**caractérisé en ce que** :
pour déterminer la position relative de l'objet (5) par rapport à la trajectoire (9), la trajectoire (9) est subdivisée en une pluralité de cellules (12), et au moins une des cellules (12) est associée à l'objet (5) où, dans la représentation optique de la trajectoire (9), une surface (15) de la représentation de la trajectoire (9) correspondant à l'au moins une cellule (12) associée est mise en évidence par rapport aux autres surfaces de la trajectoire (9).

5. Procédé selon la revendication 4,
**caractérisé en ce que** :
la trajectoire (9) est subdivisée dans la direction transversale en au moins deux bandes ($N_{IS}$) et dans la direction longitudinale en au moins deux rangées ($K_{IS}$), où une pluralité de cellules (12) sont définies par des zones superposées respectives des bandes ($N_{IS}$) et des rangées ($K_{IS}$).

6. Procédé selon la revendication 4 ou la revendication 5,
**caractérisé en ce que** :
au moins sur un côté de la trajectoire (9), une bande supplémentaire est définie et subdivisée en des cellules supplémentaires (13), de manière à ce que, dans l'image d'affichage (BA), la position d'un objet (5) présent à côté de la trajectoire (9) soit également marquée.

7. Procédé selon l'une quelconque des revendications 4 à 6,
**caractérisé en ce que** :
la représentation optique de la trajectoire (9) dans l'image d'affichage (BA) consiste exclusivement en des lignes de délimitation latérales (10, 11) et en la surface mise en évidence (15).

8. Procédé selon l'une quelconque des revendications 4 à 7,
**caractérisé en ce que** :
l'association de l'au moins une cellule (12) avec l'objet (5) comprend de calculer, pour chacune des cellules (12), une valeur de superposition (W), qui décrit un degré de superposition de la cellule respective (12) avec l'objet (5), où, en fonction des valeurs de superposition (W), l'au moins une cellule (12) est associée à l'objet (5).

9. Procédé selon la revendication 8,

**caractérisé par** les étapes suivantes :

- vérifier si les valeurs de superposition (W) des cellules (12) sont supérieures à une première valeur limite prédéterminée (T1),
- sélectionner des cellules (12) dont la valeur de superposition (W) est supérieure à la première valeur limite (T1), et rejeter les cellules restantes (12),
- pour chaque rangée ($K_{IS}$) de cellules sélectionnées (12), sélectionner la cellule (12) ayant la plus grande valeur de superposition (W) dans la rangée respective ($K_{IS}$) et sélectionner les cellules adjacentes (12) de la même rangée ($K_{IS}$) dont la valeur de superposition (W) est supérieure à une seconde valeur limite prédéterminée (T2), qui est supérieure à la première valeur limite (T1), et rejeter les cellules restantes (12), et
- associer au moins l'une des cellules sélectionnées (12) à l'objet (5), et mettre en évidence optiquement la surface (15) de la trajectoire représentée (9) qui correspond à l'au moins une cellule associée (12).

10. Procédé selon l'une quelconque des revendications 4 à 9,
**caractérisé en ce que** :
dans le cas où un ou plusieurs objets (5) sont associés à plusieurs cellules (12) de la même bande ($N_{IS}$), seule la surface (15) de la trajectoire représentée (9) sur l'image d'affichage (BA) est mise en évidence, laquelle correspond à la cellule (12) la plus proche du véhicule à moteur (1).

11. Procédé selon l'une quelconque des revendications précédentes,
**caractérisé en ce que** :
la trajectoire attendue (9) du véhicule à moteur (1) dans l'image d'affichage (BA) n'est représentée que jusqu'à l'objet (5).

12. Procédé selon l'une quelconque des revendications précédentes,
**caractérisé en ce que** :
une coloration de la représentation de la trajectoire (9) est définie en fonction d'une distance de l'objet (5) par rapport au véhicule à moteur (1).

13. Procédé selon l'une quelconque des revendications précédentes,
**caractérisé en ce que** :
une région (ROI) de l'image de caméra (BK) à laquelle l'algorithme de détection pour identifier l'objet (5) est appliqué est définie en fonction de la position relative d'un objet (5) par rapport à la trajectoire (9).

14. Système de caméra (2) pour un véhicule à moteur (1), dans lequel le système de caméra (2) est configuré pour exécuter un procédé selon l'une quelconque des revendications 1 à 13.

15. Véhicule à moteur (1) comprenant un système de caméra (2) selon la revendication 14.

Fig.1

Fig.2

Fig.3

Fig.4

**Fig.5**

**Fig.6**

Fig.7

Fig.8

Fig.9

Fig.10

5d

BK

13

12

8    10

# Fig.11

BA    5a  5b   5c

10    15

15    11

# Fig.12

Fig.13

Fig.14

Fig.15

Fig.16

Fig.17

Fig.18

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011014482 A1
- EP 1065642 A2
- JP 2011119917 A
- EP 1950689 A2